# EUROPÄISCHE PATENTSCHRIFT

(11) **EP 1 712 216 B1**
(45) Veröffentlichungstag und Bekanntmachung des Hinweises auf die Patenterteilung: **14.05.2008**
(21) Anmeldenummer: 05007914.4
(22) Anmeldetag: 12.04.2005
(51) Int. Cl.: A61J 1/00, B42D 15/00

(54) **Verpackung für ein Produkt der Dentaltechnik mit einer dem Produkt zugehörigen Etikette**
packaging for a dental product and its appropriate label
emballage pour produit dentaire et son étiquette

(43) Veröffentlichungstag der Anmeldung: 18.10.2006
(73) Patentinhaber: Straumann Holding AG, 4002 Basel (CH)
(72) Erfinder: Brunner, Gideon, CH-4053 Basel (CH)
(74) Vertreter: Schaad, Balass, Menzl & Partner AG

(56) Entgegenhaltungen:
- WO-A-92/08419
- WO-A-93/02631
- WO-A-20/04002357
- US-A- 4 526 404
- US-A- 5 538 129
- US-A- 5 887 707

## Beschreibung

Die Vorliegende Erfindung betrifft eine Verpackung für ein Produkt der Dentaltechnik gemäss dem Oberbegriff des Anspruchs 1.

Eine Verpackungen für ein Produkt der Dentaltechnik, ein Implantat, ist in WO 2004/002357 offenbart. Diese Verpackung weist einen eine Produktaufnahmevertiefung aufweisenden unteren Teil aus Metallfolie und einen die Produktaufnahmevertiefung verschliessenden, oberen Teil, ebenfalls aus Metallfolie, auf. Die beiden Teile sind miteinander verschweisst. Die Produktaufnahmevertiefung wird derart mittels des oberen Teils verschlossen, dass die Produktaufnahmevertiefung im Wesentlichen frei ist von Luft, Wasser und Feuchtigkeit. Um die Verpackung zu öffnen, weist der obere Teil ein Abziehstreifen auf.

Eine gattungsgemässe Verpackung für ein Dentalprodukt ist aus US 5,538,129 bekannt. Diese Verpackung weist einen Behälter mit einem Laderaum mit einer Öffnung und einem die Öffnung umgebenden Ansatzstück auf. Ein Deckel erstreckt sich über die Öffnung und das Ansatzstück. Ein druckempfindlicher Klebstoff verbindet den Deckel entlang einem die Öffnung zumindest teilweise umgebenden ersten Bereich lösbar mit dem Ansatzstück. Eine hermetische Dichtung verbindet den Deckel entlang einem die Öffnung umgebenden zweiten Bereich mit dem Ansatzstück. Der zweite Bereich ist zwischen dem ersten Bereich und der Öffnung angeordnet.

Produkte der Dentaltechnik, wie beispielsweise Prothetikaufbauten, sind vielmals individuelle Anfertigungen. Diese individuellen Produkte werden üblicherweise mit einer eindeutigen Referenz versehen, die beispielsweise an der Verpackung angebracht ist. Nach der Entnahme des Produkts aus der Verpackung wird üblicherweise die Verpackung entsorgt.

Es ist eine Aufgabe der vorliegenden Erfindung, eine gattungsgemässe Verpackung zu schaffen, welche es ermöglicht, die Verbindung zwischen der Referenz und dem individuellen Produkt auch nach dessen Entnahme aus der Verpackung und selbst bei entsorgter Verpackung auf einfachste Weise aufrecht zu erhalten.

Diese Aufgabe wird durch eine Verpackung gemäss Anspruch 1 gelöst.

Erfindungsgemäss weist die Verpackung einen Produkthalter mit einer nach oben ausgerichteten Oberfläche auf, wobei der Produkthalter eine nach oben offene Produktaufnahmevertiefung aufweist.

Auf der Oberfläche des Produkthalters ist eine vorzugsweise selbstklebende Folie angebracht. Diese Folie überspannt die Produktaufnahmevertiefung und weist einen Abziehstreifen auf, welcher mittels einer linienförmigen Schwächung, vorzugsweise einer Perforation, von einem restlichen Bereich der Folie abgetrennt ist. Die Schwächungslinie verläuft derart, dass es möglich ist, den Abziehstreifen vom restlichen Bereich der Folie mittels Wegziehen abzutrennen. Der Abziehstreifen ist mit einer, beispielsweise aufgedruckten, Referenz versehen, welche eindeutig einem in der unter dem Abziehstreifen, in der Produktaufnahmevertiefung aufgenommenen Produkt zugeordnet ist.

Da der Abziehstreifen auf seiner der Produktaufnahmevertiefung zugewandeten Seite selbstklebend ausgebildet ist, ist, es beispielsweise einem Zahnarzt möglich, ein Produkt der Verpackung zu entnehmen und den Abziehstreifen mit der Referenz des Produkts beispielsweise auf ein Protokollblatt, einer Patientenkarte oder dergleichen aufzukleben, wodurch die Verbindung zwischen Referenz und Produkt auf einfachste Weise aufrecht erhalten bleibt.

Vorzugsweise ist die selbstklebende Seite des Abziehstreifens mit einer Schutzfolie bedeckt, sodass das in der Produktaufnahmevertiefung aufgenommene Produkt nicht am Abziehstreifen haften kann. Nachdem der Abziehstreifen von der Verpackung getrennt wurde, kann die Schutzfolie entfernt werden und dann beispielsweise auf das Protokollblatt oder dergleichen aufgeklebt werden.

In einer weiteren vorteilhaften Ausführungsform weist die Verpackung mehrere Produktaufnahmevertiefungen auf, welche jeweils von einem Abziehstreifen verschlossen sind.

In einer weiteren vorteilhaften Ausführungsform weist die Verpackung eine oder mehrere Hilfsproduktaufnahmevertiefungen, beispielsweise für Schrauben, auf. Die Hilfsproduktaufnahmevertiefungen werden ebenfalls von der Folie überspannt, die bei den Hilfsproduktaufnahmevertiefungen durch linienförmige weitere Schwächungen der Folie definierte und von der Folie nicht vollständig abtrennbare öffnungszungen aufweist.

Weitere bevorzugte Ausbildungsformen der erfindungsgemässen Verpackung sind in den weiteren abhängigen Ansprüchen angegeben.

Weitere besondere Vorteile und Wirkungsweisen der erfindungsgemässen Verpackung ergeben sich aus der

Detailbeschreibung und der Zeichnung.

Im folgenden wird die Erfindung anhand einem in der Zeichnung dargestellten Ausführungsbeispiel näher erläutert. Es zeigen rein schematisch:
- Fig. 1: in Draufsicht einen Produkthalter mit fünf Produktaufnahmevertiefungen und drei Hilfsproduktaufnahmevertiefungen;
- Fig. 2: in Draufsicht den Produkthalter gemäss Fig. 1 mit auf diesen aufgeklebter Folie mit durch Perforation definierte Abziehstreifen, welche die Produktaufnahmevertiefungen verschliessen, und mit durch Perforation definierten Öffnungszungen, welche die Hilfsproduktaufnahmevertiefungen verschliessen; und das
- Fig. 3: in Schnittdarbtellung den in eine Schachtel, bestehend aus einer Schale und einem Deckel, eingesetzten Produkthalter (entlang der in Fig. 2 eingezeichneten Linie III) gemäss Fig. 2.

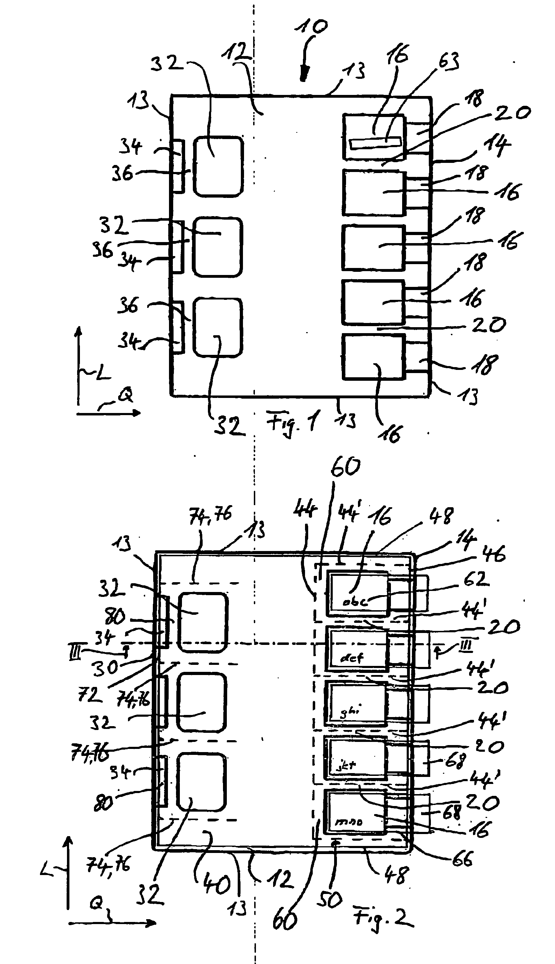

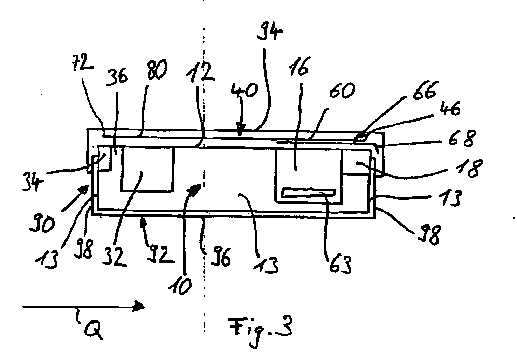

Ein in Fig. 1 bis Fig. 3 gezeigter Produkthalter 10 weist eine rechteckige, eine Längsrichtung L und eine Querrichtung Q definierende Oberseite 12 auf, wobei die Ecken dieses Rechtecks abgerundet sind. Am Rand der Oberseite 12 und von dieser nach unten abstehend weist der Produkthalter 10 vier Seitenwände 13 (siehe Fig. 3) auf. Die Seitenwände 13 weisen alle dieselbe Höhe auf.

Entlang einer Längsseite 14 der beiden Längsseiten 14 und 30 der Oberseite 12 sind fünf Produktaufnahmevertiefungen 16 ausgebildet. Sie weisen zur zugeordneten Seitenwand 13 einen Abstand von beispielsweise 5 mm auf. Im folgenden wird eine dieser Produktaufnahmevertiefungen 16 beschrieben.

Die Produktaufnahmevertiefung 16 ist eine quaderförmige Vertiefungen, welche von der Oberseite 12 her in den Produkthalter 10 eingeformt ist. Kanten der Produktaufnahmevertiefung 16 verlaufen in Längsrichtung L, Querrichtung Q und in einer Richtung rechtwinklig zur Längsrichtung L und zur Querrichtung Q, wobei die Kanten und Ecken der Produktaufnahmevertiefung 16 abgerundet sind. Die Tiefe der Produktaufnahmevertiefung 16 ist, von der Oberseite 12 her gemessen etwas geringer gewählt, als die Höhe der Seitenwände 13.

Jeder Produktaufnahmevertiefung 16 ist eine in Richtung nach oben offene Nut 18 zugeordnet. Jede der Nuten 18 ist von der Oberseite 12 her in den Produkthalter 10 eingeformt und bildet eine Verbindung zwischen der Produktaufnahmevertiefung 16 und der an die Längsseite 14 angrenzenden Seitenwand 13. Die Nut 18 ist, von der Oberseite 12 her gemessen, etwa ein Drittel so tief ausgebildet wie die Produktaufnahmevertiefung 16. Die Nut 18 ist in Längsrichtung L schmaler ausgebildet als die Produktaufnahmevertiefung 16 und mittig zu dieser angeordnet.

Zwischen je zwei benachbarten Produktaufnahmevertiefungen 16 liegt ein Quersteg 20.

Entlang der anderen Längsseite 30 der beiden Längsseiten 14 und 30 der Oberseite 12 sind drei Hilfsproduktaufnahmevertiefungen 32 ausgebildet. Im folgenden wird eine dieser Hilfsproduktaufnahmevertiefungen 32 beschrieben.

Die Hilfsproduktaufnahmevertiefung 32 ist eine quaderförmige Vertiefung, welche von der Oberseite 12 her in den Produkthalter 10 eingeformt ist. Die Kanten der Hilfsproduktaufnahmevertiefung 32 verlaufen in Längsrichtung L, Querrichtung Q und in einer Richtung rechtwinklig zur Längsrichtung L und zur Querrichtung Q, wobei Kanten und Ecken der weiteren Produktaufnahmevertiefüng 32 abgerundet sind. Eine Tiefe der Produktaufnahmevertiefung 32 ist geringfügig geringer gewählt, als die Höhe der Seitenwände 13.

Von der Oberseite 12 und von der an die Längsseite 30 angrenzende Seitenfläche 13 her ist zu jeder Produktaufnahmevertiefung 32 in den Produkthalter 10 eine quaderförmige Hilfsvertiefung 34 eingeformt. Die Hilfsvertiefungen 34 sind durch je einen Längssteg 36 von den Hilfsproduktaufnahmevertiefung 32 abgetrennt.

Auf die Oberseite 12 des Produkthalters 10 ist eine durchsichtige, einseitig vollflächig selbstklebende Folie 40 aus Kunststoff aufgeklebt. Die einstückige Folie 40 überspannt die produktaufnahmevertiefungen 16 und die Hilfsproduktaufnahmevertiefungen 32 und erstreckt sich wenigstens annähernd bis zum Rand der Oberseite 12.

Die Folie 40 weist einen geraden, linienförmigen, in Längsrichtung L verlaufenden Perforationsabschnitt 44 auf, der derart angeordnet ist, dass die Produktaufnahmevertiefungen 16 zwischen dem Perforationsabschnitt 44 und der Längsseite 14 liegen. Weitere querverlaufende Perforationsabschnitte 44' verbinden den in Längsrichtung L verlaufende Perforationsabschnitt 44 mit einem zur Längsseite 14 des Produkthalters 10 nahegelegenen, in Längsrichtung L verlaufenden Rand 46 der Folie 40 derart, dass diese zumindest nahezu mittig auf dem zwischen zwei Produktaufnahmevertiefungen 16 liegenden Quersteg 20 beziehungsweise zwischen einem in Querrichtung Q verlaufenden, nahegelegenen Rand 48 der Folie 40 und der jeweils in Längsrichtung L äussersten Produktaufnahmevertiefung 16 verlaufen.

Der in Längsrichtung L verlaufende Perforationsabschnitt 44 bildet zusammen mit den querverlaufenden Perforationsabschnitten 44' eine linienförmige Schwächung 50, sodass die Folie 40 zu jeder Produktaufnahmevertiefung 16 einen Abziehstreifen 60 aufweist, welcher die Produktaufnahmevertiefung 16 überspannt. Jeder Abziehstreifen 60 ist von der linienförmigen Schwächung 50 und einem Teil des in Längsrichtung L verlaufenden Randes 46 der Folie 40 vollständig begrenzt.

Jeder Abziehstreifen 60 ist mit einer aufgedruckten Referenz 62 versahen, welche das in der Produktaufnahmevertiefung 16 aufgenommene Produkt 63, hier ein Prothetikaufbau, eindeutig kennzeichnet. In der Zeichnung sind hierfür beispielhaft die Buchstabenfolgen 'abc', 'def', 'ghi','jkt' und 'mno' gezeigt, wobei selbstverständlich die Referenzen 62 aus einer beliebigen Anzahl von einzelnen Zeichen gebildet sein kann und als einzelnes Zeichen vorzugsweise Schriftzeichen (Buchstaben, Ziffern, Interpunktionszeichen etc. in beliebigen Alphabeten bzw. Schriftsystemen) verwendet werden.

Anstelle der Buchstabenfolge kann selbstverständlich auch ein Strichcode als Referenz verwendet werden.

Da die Folie 40 gesamtflächig selbstklebend ist und somit ebenfalls die der Produktaufnahmevertiefungen 16 zugewandte Seite der Abziehstreifen 60 selbstklebend sind, ist der freiliegende, die Produktaufnahmevertiefung 16 und die Nut 18 überdeckende Bereich jedes Abziehstreifens 60 vorzugsweise vollständig mit einer Schutzfolie 66 bedeckt, um ein Festkleben der in der Produktaufnahmevertiefung 16 gehaltenen Produkte 63 zu verhindern. Um das Fassen und Entfernen des Abziehstreifens 60 für die Entnahme des in der betreffenden Produktaufnahmevertiefung 16 gelegenen Produkts 63 zu erleichtern, weist die Schutzfolie 66 eine über den in Längsrichtung L verlaufenden Rand 46 der Folie 40 vorstehende Lasche 68 auf. Diese erleichtert auch das nachfolgende Abschälen der Schutzfolie 66 vom abgetrennten Abziehstreifen 60.

Von einem weiteren, nahe zur anderen Längsseite 30 des Produkthalters 10 gelegenen, in Längsrichtung L verlaufenden Rand 72 der Folie 40 her verlaufen Perforationsabschnitte 74 in Richtung der querverlaufenden Kanten der Folie 40. Entsprechend den querverlaufenden Perforationsabschnitten 44' verlaufen die Perforationsabschnitte 74 mittig zwischen den Hilfsproduktaufnahmevertiefungen 32 hindurch beziehungsweise mittig zwischen der in Längsrichtung L jeweils äussersten Hilfsproduktaufnahmevertiefung 32 und dem querverlaufenden, nahegelegenen Rand der Folie 40. Die Länge der Perforationsabschnitte 74 ist derart gewählt, dass diese von der weiteren Längskante 72 her gesehen in kleinem Abstand hinter den Hilfsproduktaufnahmevertiefungen 32 enden.

Die Perforationsabschnitte 74 bilden eine linienförmige Schwächung 76, durch welche Öffnungszungen 80 definiert werden. Jede Öffnungszunge 80 überspannt eine der Hilfsproduktaufnahmevertiefungen 32 vollständig und eine dieser Hilfsproduktaufnahmevertiefung 32 zugeordnete Hilfsvertiefung 34 zumindest teilweise.

Die Öffnungszungen 80 tragen vorzugsweise eine Beschriftung zur Kennzeichnung der in der jeweils darunter liegenden Hilfsproduktaufnahmevertiefung 32 gehaltenen Hilfsprodukte, beispielsweise einer Schraube zum Befestigen des Prothetikaufbaus an einem Implantat. Analog zur Schutzfolie 66 des Abziehstreifens 60 kann eine weitere Schutzfolie den freiliegenden, die Hilfsproduktaufnahmevertiefung 32 überspannenden Bereich jeder Öffnungszunge 80 abdecken.

Der Produkthalter 10 ist in eine handelsübliche Schachtel 90 (siehe Fig. 3), bestehend aus einer Schale 92 und einem Deckel 94 in allgemein bekannter Art und Weise, eingesetzt. Die Schale 92 weist eine rechteckige Grundfläche 96 und vier Seitenwände 98 auf. Die Dimensionen dieser Schale 92 sind derart gewählt, dass der Produkthalter 10 in die Schale 92 einsetzbar ist und die Seitenwände 13 des Produkthalters 10 an die Seitenwände 98 der Schale 92 anliegen. Die Tiefe der schale 92 ist derart gewählt, dass bei eingesetztem Produkthalter 10 die Oberseite 12 des Produkthalters 10 geringfügig oberhalb des Randes der Schale 92 zu liegen kommt. Der Deckel 94 ist auf die Schale 92 in bekannter Art und Weise aufsetzbar.

Als Material für den Produkthalter 10 wird bevorzugt ein hochschlagfestes Polystyrol SB/HK verwendet, welches eine helle Farbe aufweist. Hergestellt wird der Produkthalter beispielsweise durch Tiefziehen einer Kunststoffbahn oder durch Spritzgiessen.

Für die Schachtel 90 wird bevorzugt ein auf Polymethylmethacrylat basierendes Polymer, beispielsweise das Produkt mit der Handelsbezeichnung Oroglas 327, verwendet. Der Deckel der Schachtel 90 ist bevorzugt transparent.

Die erfindungsgemässe Verpackung wird wie folgt verwendet. Der Produkthalter 10 wird in die Schale 92 der Schachtel 90 eingesetzt. Darauf hin wird in die Produktaufnahmevertiefung 16 ein Produkt 63, beispielsweise ein Prothetikaufbau, eingelegt. In die weitere Produktaufnahmevertiefung 32 wird ein Hilfsprodukt, beispielsweise eine oder mehrere Schrauben desselben Typs, eingelegt. Der oben beschriebene Produkthalter 10 ist dazu geeignet, maximal fünf Produkte individuell und maximal dreierlei Hilfsprodukte unterschiedlichen Typs individualisiert aufzunehmen.

In einem folgenden Schritt wird die Folie 40 aufgeklebt. Eine Beschriftung der Folie 40 mit verschiedenen Angaben zum Produkt und Hersteller und insbesondere die Beschriftung der Abziehstreifen 60 erfolgt vorzugsweise vor dem Aufkleben der Folie 40. Die Schutzfolien 66 werden vor dem Aufkleben der Folie 40 auf die Oberseite 12 des Produkthalters 10 an die Folie 40 angebracht.

In einem weiteren Schritt wird der Deckel 94 auf die Schachtel 90 aufgesetzt und beispielsweise für den Versand an einen Kunden des Herstellers vorbereitet und verschickt. ,

Der Kunde, beispielsweise ein Zahnarzt, hebt den Deckel 94 der Schachtel 90 vor Gebrauch ab. Durch die Folie 40 sind nach dem Abheben des Deckels 94 die Produkte 63 wie auch die Hilfsprodukte immer noch sicher im Produkthalter 10 gehalten. Die Nut 18 ermöglicht ein einfacheres Fassen der Lasche 68 der Schutzfolie 66 und des damit verbundenen Abziehstreifens 60. Die Schwächung 50 ermöglicht, dass der Abziehstreifen 60 problemlos von der Folie 40 vollständig getrennt werden kann, ohne dass die Gefahr besteht, dass dabei eine weitere Produktaufnahmevertiefung 16 ungewollt geöffnet wird.

Nach dem Abtrennen des Abziehstreifens 60 wird die Schutzfolie 66 vom Abziehstreifen 60 entfernt, wodurch die selbstklebende Oberfläche des Abziehstreifens 60 freigelegt ist. Der Abziehstreifen 60 wird darauffolgend auf ein Protokollblatt, ein Patientenblatt oder dergleichen aufgeklebt. Mittels der auf dem Abziehstreifen 60 aufgedruckten Referenz 62 ist es auf einfachste Weise möglich, ohne zusätzliche Fehlerquelle die Referenz 62 von der Verpackung des Produkts 63 auf das Protokollblatt oder dergleichen zu übertragen.

Falls notwendig, kann das Hilfsprodukt aus der Hilfsproduktaufnahmevertiefung 32 entnommen werden. Die Hilfsvertiefung 34 erleichtert ein Fassen der Öffnungszunge 80. Im Gegensatz zum Abziehstreifen 60 wird die Öffnungszunge 80 nicht von der Folie 40 abgetrennt und kann nach der Entnahme des Hilfsprodukts dank der selbstklebenden Oberfläche wieder verschlossen werden. Beim erstmaligen Anheben der Öffnungszunge 80 wird eine entlang der Schwächung 76 verlaufende Verbindung von Folie 40 und Öffnungszunge 80 getrennt.

## Patentansprüche

1. Verpackung für ein Produkt der Dentaltechnik, insbesondere für einen Prothetikaufbau, welche einen eine nach oben offene Produktaufnahmevertiefung (16) aufweisenden Produkthalter (10) und eine am Produkthalter (10) angebrachte Folie (40) aufweist, welche die Produktaufnahmevertiefung (16) überspannt auf einer der Produktaufnahmevertiefung (16) zugewandten Seite ganzflächig selbstklebend ausgebildet ist und einen Abziehstreifen (60) zur Ermöglichung einer Entnahme des Produkts aufweist, wobei der Abziehstreifen eine individuelle, dem Produkt zugeordnete Referenz (62) trägt, und die selbstklebende Seite des Abziehstreifens (60) von einer abtrennbaren Schutzfolie (66) bedeckt ist,
**dadurch gekennzeichnet, dass**
die Folie (40) eine den Abziehstreifen (60) abgrenzende, linienförmige Schwächung (50) aufweist, derart dass dieser Abziehstreifen (60) vollständig entfernbar ist, und die abtrennbaren Schutzfolie (66) über den Abziehstreifen (60) vorsteht.

2. Verpackung gemäss Anspruch 1, **dadurch gekennzeichnet, dass** die Folie (40) mit der selbstklebenden seite auf den Produkthalter (10) aufgeklebt ist.

3. Verpackung gemäss einem der Ansprüche 1 bis 2, **dadurch gekennzeichnet, dass** die Folie (40) im wesentlichen aus durchsichtigem Kunststoff besteht.

4. Verpackung gemäss einem der Ansprüche 1 bis 3, **dadurch gekennzeichnet, dass** der Produkthalter (10) mehrere Produktaufnahmevertiefungen (16) aufweist, welche jeweils von der Folie (40) überspannt sind, und dass die Folie (40) je Produktaufnahmevertiefung (16) einen Abziehstreifen (60) aufweist, die eine individuelle Produktentnahme ermöglichen.

5. Verpackung gemäss einem der Ansprüche 1 bis 4, **dadurch gekennzeichnet, dass** der Produkthalter (10) eine nach oben offene Nut (18) aufweist, welche von der Produktaufnahmevertiefung (16) zu einem seitlichen Ende des Produkthalters (10) verläuft und welche vorzugsweise vom Abziehstreifen (60) überspannt ist.

6. Verpackung gemäss einem der Ansprüche 1 bis 5, **dadurch gekennzeichnet, dass** der Produkthalter (10) weiter eine Hilfsproduktaufnahmevertiefung (32) aufweist, welche von der Folie (40) überspannt ist und eine Öffnungszunge (80) zur Ermöglichung einer Entnahme des Hilfsprodukts aufweist, wobei die Öffnungszunge (80) durch eine linienförmige weitere Schwächung (76) der Folie (40) definiert ist.

7. Verpackung gemäss Anspruch 6, **dadurch gekennzeichnet, dass** der Produkthalter (10) mehrere Hilfsproduktaufnahmevertiefungen (32) aufweist, welche jeweils von der Folie (40) überspannt sind, und dass die Folie (40) je Hilfsproduktaufnahmevertiefung (32) eine Öffnungszunge (80) aufweist, die ein individuelles Öffnen jeder Hilfsproduktaufnahmevertiefung (32) ermöglicht.

8. Verpackung gemäss Anspruch 6 oder 7, **dadurch gekennzeichnet, dass** eine seitlich und nach oben offene, vorzugsweise von der Hilfsproduktaufnahmevertiefung (32) getrennte Hilfsvertiefung (34) zwischen der Hilfsproduktaufnahmevertiefung (32) und einer nächstgelegenen Seitenfläche des Produkthalters (10) angeordnet ist.

9. Verpackung gemäss einem der Ansprüche 1 bis 8, **dadurch gekennzeichnet, dass** der Produkthalter (10) in einer Schale (92) einer Schachtel (90) mit abnehmbarem, wiederaufsetzbaren und vorzugsweise durchsichtigen Deckel angeordnet ist.

## Claims

1. Package for a dental product, in particular for a prosthetic superstructure, which package has a product holder (10) comprising an upwardly open product-receiving recess (16), and a film (40) which is arranged on the product holder (10), spans the product-receiving recess (16), is made self-adhesive over the entire surface of a side directed toward the product-receiving recess (16) and comprises a pull-off strip (60) to permit removal of the product, wherein the pull-off strip bears an individual reference (62) assigned to the product, and the self-adhesive side of the pull-off strip (60) is covered by a detachable protective film (66), **characterized in that** the film (40) has a linear weakening (50) that delimits the pull-off strip (60), such that this pull-off strip (60) can be completely removed, and the detachable protective film (66) protrudes past the pull-off strip (60).

2. Package according to Claim 1, **characterized in that** the film (40) with the self-adhesive side is affixed to the product holder (10).

3. Package according to one of Claims 1 to 2, **characterized in that** the film (40) is principally made of transparent plastic.

4. Package according to one of Claims 1 to 3, **characterized in that** the product holder (10) has several product-receiving recesses (16) that are each spanned by the film (40), and **in that** the film (40) has one pull-off strip (60) per product-receiving recess (16) to permit individual product removal.

5. Package according to one of Claims 1 to 4, **characterized in that** the product holder (10) has an upwardly open groove (18) which extends from the product-receiving recess (16) to a lateral end of the product holder (10) and which is preferably spanned by the pull-off strip (60).

6. Package according to one of Claims 1 to 5, **characterized in that** the product holder (10) additionally has an auxiliary product-receiving recess (32) which is spanned by the film (40) and has an opening tab (80) to permit removal of the auxiliary product, the opening tab (80) being defined by a further linear weakening (76) of the film (40).

7. Package according to Claim 6, **characterized in that** the product holder (10) has several auxiliary product-receiving recesses (32) that are each spanned by the film (40), and **in that** the film (40) has one opening tab (80) per auxiliary product-receiving recess (32), to permit individual opening of each auxiliary product-receiving recess (32).

8. Package according to Claim 6 or 7, **characterized in that** a laterally and upwardly open auxiliary recess (34), preferably separate from the auxiliary product-receiving recess (32), is arranged between the auxiliary product-receiving recess (32) and a contiguous side face of the product holder (10).

9. Package according to one of Claims 1 to 8, **characterized in that** the product holder (10) is arranged in a shell (92) of a box (90) with a preferably transparent lid that can be removed and put back on again.

## Revendications

1. Emballage pour produit de la technique dentaire, en particulier pour une structure de prothèse, qui présente un porte-produit (10) doté d'un creux (16) de reprise de produit ouvert dans le haut et un film (40) appliqué sur le porte-produit (10) et qui recouvre le creux (16) de reprise de produit, autocollant sur toute sa surface, formé sur un côté tourné vers le creux (16) de reprise de produit et doté d'un ruban d'enlèvement (60) pour permettre le prélèvement du produit, le ruban d'enlèvement portant une référence (62) associée au produit particulier et le côté autocollant du ruban d'enlèvement (60) étant recouvert par une feuille de protection (66) séparable,
**caractérisé en ce que**
le film (40) présente un affaiblissement (50) de forme linéaire qui délimite le ruban d'enlèvement (60) de telle sorte que ce ruban d'enlèvement (60) puisse être enlevé complètement et **en ce que** le film de protection séparable (66) déborde du ruban d'enlèvement (60).

2. Emballage selon la revendication 1, **caractérisé en ce que** le film (40) est collé sur le porte-produit (10) par son côté autocollant.

3. Emballage selon l'une des revendications 1 à 2, **caractérisé en ce que** le film (40) est essentiellement constitué d'une matière synthétique transparente.

4. Emballage selon l'une des revendications 1 à 3, **caractérisé en ce que** le porte-produit (10) présente plusieurs creux (16) de reprise de produit, tous recouverts par le film (40), et **en ce que** le film (40) présente pour chaque creux (16) de reprise de produit un ruban d'enlèvement (60) qui permet de prélever les produits séparément.

5. Emballage selon l'une des revendications 1 à 4, **caractérisé en ce que** le porte-produit (10) présente une rainure (18) ouverte vers le haut qui s'étend depuis le creux (16) de reprise de produit jusqu'à l'extrémité latérale du porte-produit (10) et de préférence recouverte par le ruban d'enlèvement (60).

6. Emballage selon l'une des revendications 1 à 5, **caractérisé en ce que** le porte-produit (10) présente en outre un creux (32) de reprise de produit auxiliaire qui est recouvert par le film (40) et qui présente une patte d'ouverture (80) qui permet de prélever le produit auxiliaire, la patte d'ouverture (80) étant définie par un autre affaiblissement linéaire (76) du film (40).

7. Emballage selon la revendication 6, **caractérisé en ce que** le porte-produit (10) présente plusieurs creux (32) de reprise de produit auxiliaire qui sont tous couverts par le film (40), et **en ce que** le film (40) présente pour chaque creux (32) de reprise de produit auxiliaire une patte d'ouverture (80) qui permet d'ouvrir séparément chaque creux (32) de reprise de produit auxiliaire.

8. Emballage selon les revendications 6 ou 7, **caractérisé en ce qu'**un creux auxiliaire séparé (34) ouvert latéralement et dans le haut, de préférence séparé du creux (32) de reprise de produit auxiliaire, est disposé entre les creux (32) de reprise de produit auxiliaire et la surface latérale adjacente du porte-produit (10).

9. Emballage selon l'une des revendications 1 à 8, **caractérisé en ce que** le porte-produit (10) est disposé dans une coquille (92) d'un sac (90) doté d'un couvercle amovible, replaçable et de préférence transparent.
